# EUROPEAN PATENT APPLICATION

(11) **EP 1 391 621 A2**
(43) Date of publication of application: **25.02.2004**
(21) Application number: 03254202.9
(22) Date of filing: 01.07.2003
(51) Int. Cl.: F16D 11/10, F16D 25/08

(54) **Drive disconnect device**

(30) Priority: 25.07.2002 GB 0217309
(71) Applicant: Goodrich Control Systems Limited, Luton, Bedfordshire LU1 3LU (GB)
(72) Inventor: Howard, Rodney Stuart, Hemel Hempstead, Hertfordshire HP 1SP (GB)
(74) Representative: Beck, Simon Antony

(57) **Abstract**

A drive disconnect mechanism is provided where a drive transfer element 12 can be moved to a disconnect position by a hydraulic actuator which itself is controlled by an electrically operated valve.

## Description

The present invention relates to a drive disconnect device. Such a device is suitable for controllably disconnecting the drive between a drive shaft and a driven shaft. The drive disconnect device is especially suited for controlled disconnection of a generator from a prime mover.

US 4,997,072 discloses a disconnect device in which a solenoid holds a spring operated annular cam assembly in a retained position. The retraction of the solenoid allows the cam to slide into a position where it engages with a rotating pin on the shaft of the drive assembly and moves the pin against a compression spring to a position where it allows a driving element to move to a position where it drivingly disconnects input and output shafts. Such an arrangement is difficult to test as the annular cam relies on the shafts to be rotating in order to give rise to the disconnect operation.

US 4,685,550 discloses an arrangement in which coaxial input and output shafts are coupled together by an axially slidable drive connection element which is normally held in position by a detent mechanism. A magnetic coil encircles the output shaft and can be energised to attract an end plate which in turn is coupled to a cylindrical element disposed within one of the shafts to displace it axially such that a detent ball can fall into a pocket, thereby allowing the drive to become disconnected. The magnetic coil must provide the entirety of the force required to overcome any friction and the spring biasing of the detent mechanism, and the disengagement of the driving and driven elements depends upon there being sufficient torque transmitted therebetween to generate displacement forces acting between inclined jaws within a clutch mechanism. Such a mechanism may not always operate to disconnect a load. For example, in the context of an avionics generator, suspected failure of the generator may result in an immediate electrical disconnection of the device. Thus, apart from internal frictional losses, it will present no load to its drive device. Nevertheless, if failure is suspected it will still be desirable to drivingly disconnect the generator from the prime mover. The arrangement described in US 4,685,550 may not be able to perform disconnect under these conditions since very little load is transmitted through disconnect device and hence very little axial force will occur between the inclined teeth.

According to a first aspect of the present invention, there is provided a drive disconnect device for releasably connecting an output shaft to a drive shaft, comprising a drive transfer element movable between a first position where it drivingly connects the drive shaft to the output shaft, and a second position where there is no driving connection between the drive shaft and the output shaft, and wherein at least one actuator is arranged to act against a first region of the drive transfer element so as to urge it to the second position.

It is thus possible to provide an arrangement in which at least one actuator acts directly on the drive transfer element. This ensures that the element can be moved irrespective of the load or torque being transferred through the drive disconnect device (provided this is less than a maximum torque for which the device is rated).

Preferably the at least one actuator is a fluid operated actuator.

The at least one fluid operated actuator is advantageously in the form of a piston and cylinder with the piston biased to a predetermined position, for example a retracted position, where the piston does not engage or substantially engage the drive transfer element.

Preferably the or each piston is selectively connectable to a source of pressurised fluid via an electrically operable valve which has a bleed path to a low pressure region. This is advantageous as it stops leakage through the valve from triggering an unexpected or unscheduled operation of the disconnect device. Alternatively an arrangement can be used where the piston is held in the first position by the provision of pressurised fluid action on a face of the piston. Thus the piston can be moved to the second position by allowing fluid to bleed to low pressure.

Preferably an accumulator is provided to maintain a sufficient store of pressurised fluid to operate the disconnect device. Thus the device can still be operated to perform a disconnect function or otherwise maintain normal operation of the device even in the event of a loss of a source of pressurised fluid or insufficient pressure therefrom.

The use of pressurised fluid means that high mechanical loadings can be achieved from relatively small and light actuators. Furthermore, fluid flow can be controlled by electrically operated valves which themselves are small and light, and certainly much lighter than would be required to obtain the same forces from a solenoid alone or through magnetic attraction.

Preferably a lock mechanism is provided to lock the drive transfer element in the second position. The lock may act directly on the drive transfer element or may act on one or more of the pistons in order to hold them in an extended or operated position.

Preferably the lock is a spring loaded pin or other detent that engages with the drive transfer element when it is at the second position. Advantageously the lock mechanism is external to the drive transfer element such that it can be reached and operated manually, for example by service technicians. This facilitates testing of the drive disconnect device by maintenance staff.

Preferably, the drive transfer element is biased, for example by a spring, towards the first position. This ensures that inadvertent disconnects do not occur as a result of vibration or dynamic loading.

Advantageously the drive transfer element is coaxially disposed with either or both of the drive shaft and the output shaft. Engagement between the drive transfer element and the drive shaft or the output shaft may be via drive dogs. The dogs may have inclined teeth giving rise to an axial load. However, the invention works equally well where the teeth are not so inclined.

Preferably the drive transfer element is in splined engagement with the output shaft. Thus the drive transfer element is axially slidable with respect to the output shaft and tends to stop rotating once the drive disconnect device has been operated. This in turn reduces the wear that may be experienced by a locking mechanism acting directly on the drive disconnect device to hold it in the disconnected position.

Preferably the fluid is a liquid, although pneumatic operation is also possible. In the context of an avionics environment supplies of pressurised liquid and pressurised air are routinely available.

Advantageously the drive transfer element includes a flange against which the at least one actuator and a spring bias element can act. The at least one actuator may be in the form of an annular piston encircling one of the drive shaft and the output shaft.

During the disconnect operation the actuator, which is held on a stator, comes into contact with the flange of the drive transfer element, which is rotating. The actuator does not have to endure the sliding contact with the flange for long. However it is advantageous for the contacting region of the actuator to be lubricated and/or formed or coated with a low friction material.

According to a second aspect of the present invention, there is provided a generator in combination with a drive disconnect device according to the first aspect of the present invention.

The present invention will further be described, by way of example only, with reference to the accompanying figures in which:
Figure 1 is a schematic diagram of a drive disconnect device constituting an embodiment of the present invention;
Figure 2 shows a further embodiment in the driving position; and
Figure 3 shows the embodiment of Figure 2 in the disconnect position.

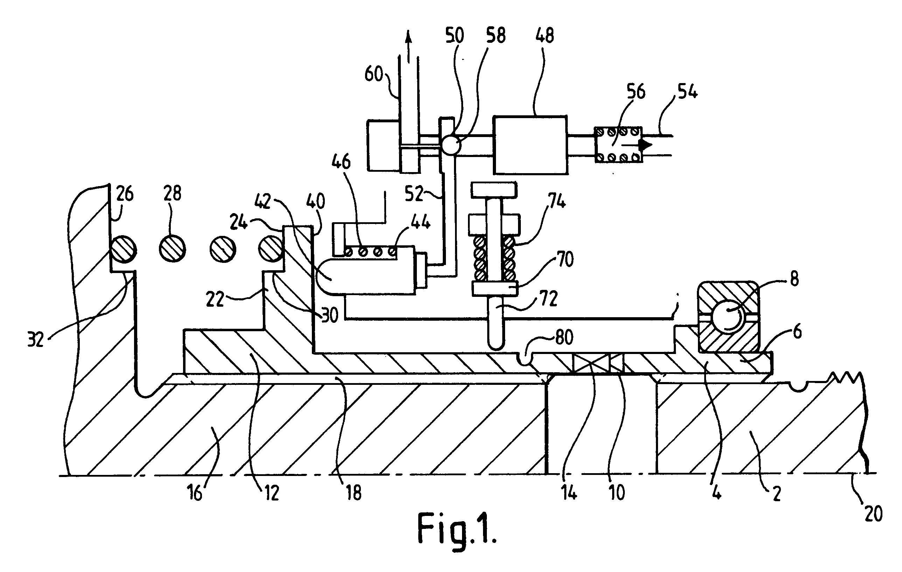

Figure 1 illustrates an arrangement in which a quill shaft 2 receives power, either directly or indirectly, from a prime mover (not shown) such as a gas turbine jet engine. The quill shaft 2 is in splined engagement with a annular element 4 which functions as a drive shaft. The drive shaft 4 has a first region 6 which engages with bearings 8 which act to support the shaft, and a second region 10 which has a castellated end section which forms drive dogs for drivingly engaging with a drive transfer element 12. The drive transfer element 12 has a similar castellated end region 14 which forms drive dogs which cooperate with the drive dogs 10 of the annular element 4. The drive transfer element 12 is coaxially disposed with respect to a rotor shaft 16 and is drivingly coupled thereto via splines 18. Thus the drive transfer element 12 does not undergo rotational movement with respect to the rotor shaft 16 but can slide axially with respect to the shaft 16. Line 20 in the figure represents an axis of rotational symmetry for the quill shaft 2, the drive shaft 4, the transfer element 12 and the rotor shaft 16.

The drive transfer element 12 has a circularly symmetric flange 22 disposed thereon, advantageously towards the end opposite to the drive dogs. The flange 22 has a first surface 24 which opposes a similar surface 26 on the rotor shaft and between which a compression spring 28 is held. The action of the compression spring is to urge the drive transfer element to move away from the surface 26 such that its drive dogs 14 interengage with the drive dogs 10 of the drive shaft 4. Stepped portions 30 and 32 of the flange 22 and on the rotor shaft 16 serve to hold the compression spring 28 in a position such that it is coaxially disposed about the rotor shaft 16. Thus, in use, rotation of the quill shaft 2 is transmitted to the drive shaft 4 via coupling elements therebetween, for example splines. Rotation of the drive shaft 4 is transmitted via the dogs 10 and 14 to the drive transfer element 12 which in turn transfers drive to the rotor shaft 16 via the splines 18. The drive transfer element 12 is held coupled to the drive shaft 4 via the action of the compression spring 28.

The annular flange 22 also defines a second surface 40 against which a piston 42 (which may for example be an annular piston or be a member of a group of one or more cylindrical pistons) can be urged to bear against by a virtue of pressurised fluid being admitted into a cylinder 44 within which the piston 42 is in substantially fluid sealed sliding engagement. The piston 42 is biased to a predetermined position, for example by a compression spring 46 which serves to hold the piston in position against possible movement that may be induced by vibration. The or each cylinder 44 is connected to a reservoir of pressurised fluid 48 via an electrically operable valve 50 and interconnecting ducts 52, which may for example be in the form of drillings. The reservoir of pressurised fluid 48 may receive fluid from a pump supply 54 via a one way valve 56. The electrically operable valve 50 may comprise a valve element 58, for example in the form of a spherical member, which bears against a cooperating valve seat under action of a biasing spring (not shown). The valve may include an internal duct 60 venting to low pressure such that leakage of fluid through the valve when it is in a position which notionally prevents the supply of fluid from the reservoir 48 to the cylinder 44 can be drained away thereby ensuring that pressure does not build within the cylinder under these circumstances.

A resetable detent or lock mechanism 70, for example in the form of a plunger 72 biased to move to an extended position by a compression spring 74 may be provided in order to hold the drive transfer element 12 in a disconnected position once drive disconnection has occurred.

In order to invoke disconnection of the rotor shaft 16 from the drive shaft 4, an electrical signal is supplied to the valve 50 so as to energise a solenoid therein to move the valve element 58 away from sealing engagement with the valve seat, and simultaneously to close or at least obstruct the passageway 60 that vents to low pressure. Alternatively, the passageway 60 may include a constriction therein such that even though it does not become obstructed by the valve element 58, the rate of fluid passage therethrough is maintained at acceptable levels. This second configuration is in fact preferable as it prevents a pressure differential across the valve element 58 from occurring during operation which may serve to prevent movement of the valve element 58 back to the position where it sealingly engages with the valve seat.

Following actuation of the valve, high pressure fluid from the reservoir 48 flows along the duct 52 and into the cylinder 44 where the increase in pressure urges the piston 42 to bear against the surface 40 and then to push the drive transfer element against the urging of the compression spring 28 to a disconnect position where the drive dogs 10 and 14 no longer interengage. As this occurs, an annular recess 80 formed in the drive transfer element 12 moves to a position whereby the end of the element 72 can engage the annular recess 80 thereby preventing further axial motion of the drive transfer element 12. Thus, the drive transfer element 12 becomes locked in the disengaged position and will remain there even when the supply of pressurised fluid to the piston 44 is removed.

It will be understood by the person skilled in the art that relatively small piston and cylinder arrangements fed from high pressure sources of fluid can produce large forces. Thus it is possible to provide a compact and lightweight actuation system which acts directly on the drive transfer element 12 to move it to a disengaged position. Furthermore, it is possible to provide a fully testable system as the operation of the piston and the resetable disconnect lock 70 can be initiated and observed by maintenance personnel whilst the quill shaft 2 and hence the rotor is not rotating. This confers a significant advantage over prior art systems which are either difficult to test, difficult to reset, or require a torque to be transferred in order to initiate the disconnection process.

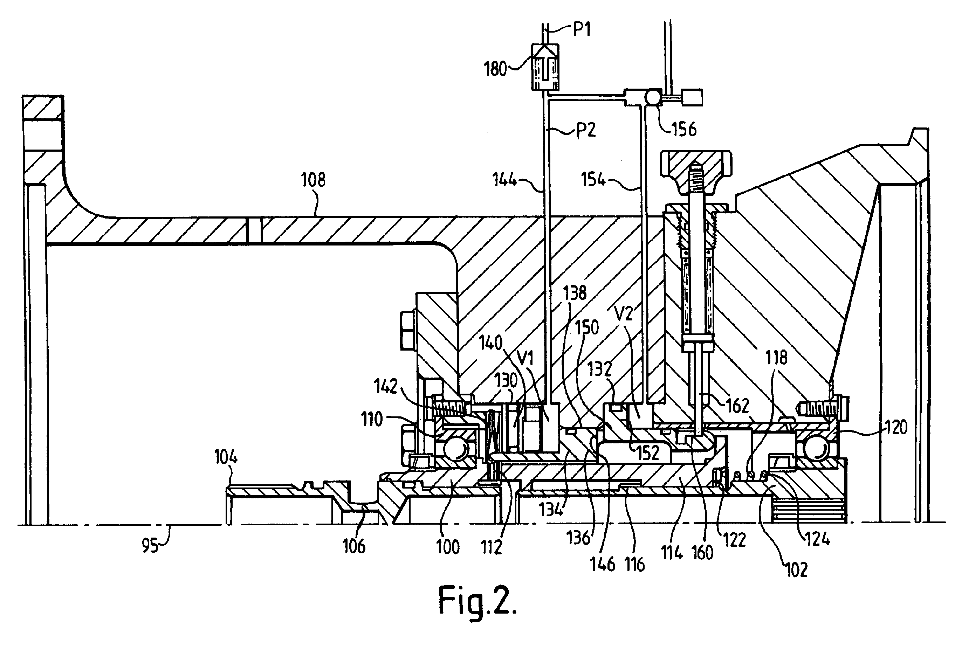

Figure 2 shows a further embodiment of the present invention in the driving configuration where torque is transmitted from a prime mover to a load. For convenience, only a portion of the disconnect mechanism is shown, although it will be appreciated that most of the components of the disconnect mechanism are circularly symmetric and encircle input and output shafts 100 and 102. In Figure 2, line 95 represents the axis of rotation of the shafts 100 and 102. Typically the input shaft 100 is driven from an aircraft gearbox via a quill shaft 104 incorporating a shear neck 106. The input shaft 100 is supported within a housing, typically a generator housing 108, by bearings 110. The bearings 110 may, for example, be a single deep groove ball bearing configuration. The input shaft 100 also carries a plurality of dogs 112 which face towards and engage with corresponding dogs on a drive sleeve 114. The drive sleeve 114 drivingly engages with the output shaft 102 via splines 116, thereby allowing the drive sleeve 114 to move axially with respect to the output shaft 102. The drive sleeve 114 is biased into engagement with the input shaft via a compression spring 118 acting between an end face 122 of the drive transfer sleeve 114 and a face 124 formed by a flange on the output shaft. The output shaft 102 is supported on bearings 120 which may advantageously be similar to the bearings 110.

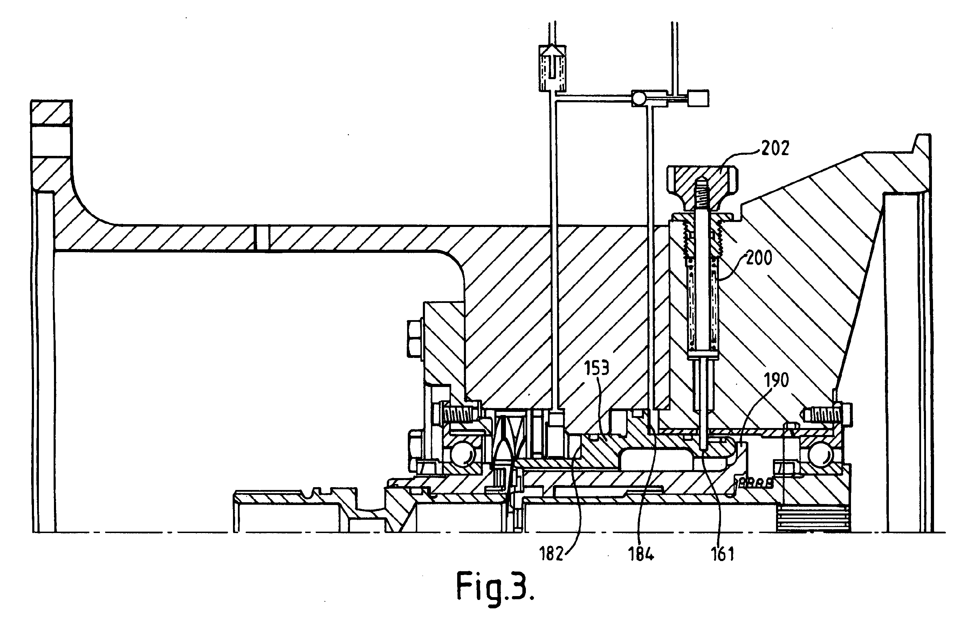

The housing 108 is profiled so as to form the radially outermost surfaces of hydraulic chambers 130 and 132. The radially innermost surface of the hydraulic chamber 130 is defined by element 134. The element 134 is circularly symmetric around the longitudinal axis of the input and output shaft and hence takes the form of a cylindrical element having an enlarged end 136 distal from the input shaft 100. The enlarged end 136 is in fluid sealed sliding engagement with a radially inward extending portion 138 of the housing 108. An accumulator piston 140 is provided within the chamber 130, and is spring biased by a compression spring 142 so as to move away from the bearing 110, that is to the right as shown in Figure 2. A volume V1 defined by the co-operation of the housing 108, the accumulator piston 142 and the element 134 is connected to an oil supply via a duct 144. An end surface 146 of the element 134 may abut against the body of a disconnect piston 150. However in a preferred arrangement the element 134 and the disconnect piston 150 are formed as a unitary component 153 as shown in Figure 3. The disconnect piston 150 has an enlarged head 152 which engages the wall of the second hydraulic chamber 132. A volume V2 within the second hydraulic chamber is connected to a duct 154. The enlarged head 150 in co-operation with the region 136 of the element 134 serves to form a differential piston having surfaces exposed to chambers V1 and V2 respectively.

The duct 154 can be selectively connected to the duct 144 or to a low pressure vent via an electrically operated valve 156.

The disconnect piston 150 is provided with a recess 160 which can engage with a locking pin 162 to lock the disconnect piston in an operated position so as to cause permanent disengagement of the input shaft and the drive sleeve 114.

In use, oil under pressure, P1, is provided to the duct 144 via a check valve 180. With the solenoid operated valve 156 kept in the de-energised position, as shown in Figure 2, the inlet oil pressure, which is typically in the region of 415 kPa (60 psi) acts on the accumulator piston 142 via the duct 144 overcoming the spring load exerted by the compression spring 142. Thus a volume of oil is accumulated under pressure within chamber V1. This oil pressure also acts on both faces of the disconnect piston, i.e. face 182 (shown in Figure 3) which faces the volume V1, and face 184, also shown in Figure 3, which faces the volume V2. The area of the disconnect piston in chamber 132 is greater than the area of the disconnect piston 150 in chamber 130 and consequently the disconnect piston is held in the stowed position as shown in Figure 1.

When the solenoid valve is energised, as shown in Figure 3, the connection between duct 154 and duct 144 is closed and instead duct 154 is vented to low pressure. Thus the oil pressure in the volume V2 is also vented to the case. However the inlet oil pressure V1 is maintained. Consequently the pressure in volume V1 acts upon the disconnect piston via face 182 to move it axially from the stowed position to an extended position. This motion causes the disconnect piston to abut a flange 190 of the drive sleeve thereby moving the drive sleeve against the urging of the compression spring 118 and also causing the dogs inter-engaging the drive sleeve and the input shaft to disengage thereby removing driving connection between the input shaft and the output shaft.

The pin 162 is, as noted before, located in a recess in the disconnect piston 150 and consequently reacts the frictional torsional forces acting between the drive sleeve and the disconnect piston. The motion of the disconnect piston 150 is limited by the pin 162 which drops into a radial channel 161 under the load exerted by compression spring 200. This action causes the disconnect piston 150 to become locked in the extended position.

If the disconnect mechanism is provided within an aeronautical generator, then the disconnect operation would cause the generator's pumps to be disconnected. Consequently the oil pressure P1 would drop and eventually the pressure P2 would exceed P1 and the check valve 180 would close. When the solenoid valve 156 is de-energised the pressure in volume V1 is dissipated and the path the volume V2 is reopened. The accumulator piston then moves axially under the load of its compression spring 142, which typically will be a wave washer.

In the event of cessation of the oil supply during normal use, the pressure P2 will exceed P1 and the check valve 180 would close. Typically the check valve operates once the pressure P2 exceeds P1 by 7 kPa (1 psi). Closure of the check valve maintains the 415 kPa (60 psi) pressure within the chambers V1 and V2. Thus disconnect is not automatically actioned by a pressure drop occurring in the oil pressure feed to the disconnect device. However, if it is desired to operate the disconnect mechanism then, once again, the solenoid valve 156 is energised thereby causing the chamber V2 to be vented to low pressure. Also, as shown in Figure 3, the valve closes the vent path from the duct 144 to the case or to V2 when it is energised. Under these circumstances the compression spring 142 acts upon the accumulator piston 140 and, through the hydraulic pressure within the volume V1, acts upon the disconnect piston 150 moving it from the stowed position to the operated position thereby causing the drive sleeve 114 to move thereby disengaging the drive dogs.

Once operated, the disconnect piston remains in the extended/disconnect position by virtue of the pin 162. In order to restore driving connection between the input shaft and the output shaft the pin 162 has to be reset. This is done by manually grasping a pin extension 202 and pulling against the action of the compression spring 200 so as to release the pin 162 from the hole 161. Under these conditions the compression spring 118 urges the drive sleeve 114 to move back to the driving engaged position. Upon commencement of drive, either from the starter generator or an aircraft gearbox rotational misalignment between the dogs is initially removed and the dogs re-engage. This therefore also re-engages drive to the oil pump allowing oil pressure on line P1 to be restored. This in turn causes oil pressure to be admitted into the chambers V1 and V2 allowing the accumulator piston to return to its correct position.

## Claims

1. A drive disconnect device for releasably connecting an output shaft (16, 102) to a drive shaft (2, 100) comprising a drive transfer element (12, 114) movable between a first position where it drivingly connects the drive shaft (2, 100) to the output shaft (16, 102), and a second position where there is no driving connection between the drive shaft and the output shaft, and the output shaft, **characterised in that** at least one actuator (44, 150) is arranged to act on the drive transfer element so as to urge it to the second position.

2. A drive disconnect device as claimed in claim 1, **characterised in that** the at least one actuator acts directly on the drive transfer element (12, 114).

3. A drive disconnect device as claimed in claim 2, **characterised in that** the at least one actuator can, in use, move the drive transfer element to the second position irrespective of the load or torque being transferred through the drive disconnect device.

4. A drive disconnect device as claimed in any one of the preceding claims, in which the at least one actuator is a fluid operated actuator.

5. A drive disconnect device as claimed in any one of the preceding claims, **characterised in that** the at least one actuator comprises a piston (42, 150) within a cylinder with the piston biased towards a predetermined position.

6. A drive disconnect device as claimed in claim 5, **characterised in that** the piston is spring biased towards the predetermined position.

7. A drive disconnect device as claimed in claim 5, **characterised in that** the piston is hydraulically biased towards the predetermined position.

8. A drive disconnect device as claimed in claim 5 or 7, **characterised in that** the at least one piston (42, 150) is selectively connectable to a high pressure fluid supply via a control valve (58, 156).

9. A drive disconnect device as claimed in claim 5, 7 or 8, **characterised in that** the at least one piston is selectively connectable to a low pressure region via a control valve (58, 156).

10. A drive disconnect device as claimed in claim 8, **characterised in that** the control valve is an electrically operated valve (58, 156).

11. A drive disconnect device as claimed in claim 4, **characterised in that** an accumulator (48, V1) is provided to store sufficient pressurised fluid to maintain operation of the disconnect device in the event of loss or degradation of a supply of pressurised fluid.

12. A drive disconnect device as claimed in any one of the preceding claims, **characterised by** further comprising a lock (72, 162) for locking one of the drive transfer element (12) and at least one piston (150) in a drive disconnect position.

13. A drive disconnect device as claimed in claim 12, **characterised in that** the lock comprises a pin (162) or other detent that engages with one of the drive transfer element and the actuator when the drive transfer element is at the second position.

14. A drive disconnect device as claimed in claim 12 or 13, **characterised in that** the lock is manually released.

15. A drive disconnect device as claimed in any one of the preceding claims, **characterised in that** the drive transfer element (12, 114) is biased towards the first position.

16. A drive disconnect device as claimed in any one of the preceding claims **characterised in that** the drive transfer element (12, 114) is coaxially disposed around the output shaft (116, 102) and is in splined engagement therewith such that the drive transfer element is axially slidable on the output shaft.

17. A drive disconnect device as claimed in any one of the preceding claims, **characterised in that** the drive transfer element includes a flange (40) against which at least one of the actuators and a spring bias element (28, 118) acts.

18. A generator including a drive disconnect device as claimed in any one of the preceding claims.
